# EUROPÄISCHE PATENTANMELDUNG

(11) **EP 0 936 797 A2**
(43) Veröffentlichungstag der Anmeldung: **18.08.1999**
(21) Anmeldenummer: 99100904.4
(22) Anmeldetag: 20.01.1999
(51) Int. Cl.: H04M 15/00, H04M 3/42

(54) **Verfahren zur Gebührenabrechnung zwischen einem Dienstleister, der einen Calling Card Service anbietet und einem Dienstleister, der den Netzzugang zum Calling Card Service bereitstellt**

(30) Priorität: 17.02.1998 DE 19806369
(71) Anmelder: Deutsche Telekom AG, 53113 Bonn (DE)
(72) Erfinder: Loos, Jürgen, 48599 Gronau (DE)

(57) **Zusammenfassung**

Verfahren zur Gebührenabrechnung zwischen einem Dienstleister, der einen Calling Card Service anbietet und einem Dienstleister, der den Netzzugang zum Calling Card Service bereitstellt.

Das erfindungsgemäße Verfahren soll einen Kostenausgleich (Provision) zwischen einem Serviceanbieter, der als Dienstleistung einen Netzzugang bereitstellt und einem Calling Card Provider, der für seine Dienstleistung diesen Netzzugang nutzt, ermöglichen.

Erfindungsgemäß wird zusätzlich zu den vom Calling Card Nutzer übermittelten Daten eine dritte Identifikationsnummer zum Calling Card Provider übermittelt, welche den Dienstleiter identifiziert, der den Netzzugang bereitgestellt hat. Durch diese dritte Identifikationsnummer soll die Abrechnung zwischen Calling Card Provider und Dienstleister, der den Netzzugang bereitgestellt hat, abgesichert werden.

Das erfindungsgemäße Verfahren eignet sich insbesondere für den Einsatz bei Telekommunikationsanlagen mit DECT-Standard.

## Beschreibung

Die Erfindung betrifft eine Erweiterung des Angebotes für sogenannte Calling Card Provider. Unter Calling Card Provider wird ein Dienstleister verstanden, der vom Nutzer der Dienstleistung, hier dem Kunden, über eine spezielle, meist gebührenfreie Zugangsrufnummer angewählt wird, und der für den Kunden die gewünschte Kommunikationsverbindung, beispielsweise zu einem Datendienst oder einem Call-Back-Dienst, bereitstellt. Der Kunde übermittelt vor der Bereitstellung der gewünschten Verbindung seine Zugangsnummern, die ihm vom Calling Card Provider zugeordnet wurden und die ihn gegenüber dem Calling Card Provider eindeutig identifizieren. Diese Zugangsnummern bestehen aus einem öffentlichem Teil und einem geheimen Teil. Der öffentlicheTeil ist zumeist die Kartennunmmer der Calling Card und der geheime Teil ist eine PIN, die zu der Kartennummer vergeben wurde (Siehe; Connect 7/97 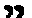 Gute Karten im Ausland" Telefon Ratgeber S. 46).

Gegenwärtig geht derjenige, der als Dienstleister dem Nutzer einer Calling Card den Netzzugang zu seinem Calling Card Provider stellt, relativ leer aus, da der Zugang zur Rufnummer des Calling Card Services zumeist gebührenfrei ist. Er kann lediglich, wenn er den Besitzer der Calling Card kennt, spezielle Vorkehrungen treffen, z. B. Nummer sperren oder erst nach einer Vereinbarung freigeben.
Schnurlose Telekommunikationssysteme, insbesondere mit DECT Standard, sind dabei, sich durch ihre Verbreitung in Haushalten und Betrieben nahezu flächendeckenden Zugang zum Festnetz zu schaffen. Damit besteht prinzipiell die Möglichkeit, daß im Grunde z. B. jeder DECT-Anlagenbesitzer zum Anbieter eines persönlichen "Telepoints" und damit zum Dienstleister für die Bereitstellung von Netzzugängen wird. Das Problem liegt jedoch in der Abrechnung zwischen dem Dienstleister, der den Calling Card Service anbietet (Calling Card Provider) und demjenigen, der dem Kunden (Calling Card Nutzer) den Netzzugang zum Calling Card Provider stellt. Das wird immer dann der Fall sein, wenn der Calling Card Besitzer einen fremden Netzzugang zur Servicenummer des Calling Card Providers benutzt, beispielsweise wenn er sich mit seinem Mobilteil außerhalb der Reichweite seiner eigenen Basisstation befindet, oder wenn er von einem fremden Anschluß aus die Rufnummer seines Calling Card Providers wählt. Problematisch ist es insbesondere, wenn der Nutzer den Calling Card Provider über sein Mobilteil anrufen will und für den Anruf eine fremde Basisstation nutzen möchte, da er in diesem Fall nicht einmal das Grundstück betreten muß, auf dem die fremde Basisstation installiert ist.

Die technische Aufgabe besteht darin, die technische Grundlage für einen Kostenausgleich (Provision) zwischen beispielsweise einem Besitzer einer Telekommunikationseinrichtung, der hier als Dienstleistung einen Netzzugang bereitstellt und dem Service-Anbieter (Calling Card Provider), der für seine Dienstleistung diesen Netzzugang nutzt, zu schaffen.
Das Verfahren zum Kostenausgleich soll möglichst einfach und sicher sein. Ein persönlicher Kontakt oder eine Vereinbarung zwischen dem Dienstleister, der den Netzzugang stellt und dem Dienstenutzer (Calling Card Nutzer) soll hierbei vermieden werden. Die Aufgabe wird erfindungsgemäß durch die kennzeichnenden Merkmale des ersten Patentanspruchs gelöst. Zweckmäßige Ausgestaltungen sind in den Unteransprüchen ausgeführt.
Erfindungsgemäß wird bei Bereitstellung eines fremden Netzzuganges zur Service- Rufnummer des Calling-Card-Providers neben der Kartennummer und der PIN des Nutzers der Calling Card dem Calling Card Provider eine dritte zusätzliche Nummer übermittelt. Diese Nummer kennzeichnet die Telekommunikationseinrichtung bzw. den Dienstleister, der den Netzzugang bereitgestellt hat. Dieser Dienstleister fungiert juristisch als Geschäftspartner des Calling-Card-Providers und erhält von ihm eine Provision dafür, daß er den Netzzugang zur Verfügung stellt.

Die erfindungsgemäße Lösung bietet folgende Vorteile:
1.Jeder Anbieter eines Zugangs zu einem Telekommunikationsnetz, vorzugsweise der Besitzer einer Telekommunikationseinrichtung, kann sich eine neue Einnahmequelle erschließen. Diese Einnahmen sind mit geringem Aufwand zu realisieren und einfach und sicher zu handhaben. Die Abrechnungsmodalitäten laufen über den Calling Card Provider.
2. Die Calling-Card-Provider vervielfachen ihre Netzzugänge. Heute sind sie hauptsächlich auf Telefonzellen und Telekommunikationseinrichtungen von Hotels angewiesen, wobei die letzteren mehr und mehr versuchen, den Netzzugang zu Diensteanbietern über Calling Cards technisch zu verhindern (Sperrung bestimmter Netzzugänge für Calling Cards). Das liegt insbesondere darin begründet, daß ihre technischen Einrichtungen zwar benutzt werden, daß sie selber aber nichts daran verdienen.
3. Die Nutzer der Calling Cards (Kunden) vervielfachen ebenfalls ihre Netzzugänge. Sie brauchen bei DECT-Stationen noch nicht einmal das Grundstück zu betreten. Die Abrechnungsmodalitäten zwischen dem Diensteanbieter des Netzzugangs und dem Calling Card Provider werden fest vereinbart, so daß für keinen ein unkalkulierbares Risiko entsteht.

Das erfindungsgemäße Verfahren wird anhand eines Ausfülrungsbeispiels näher erläutert.

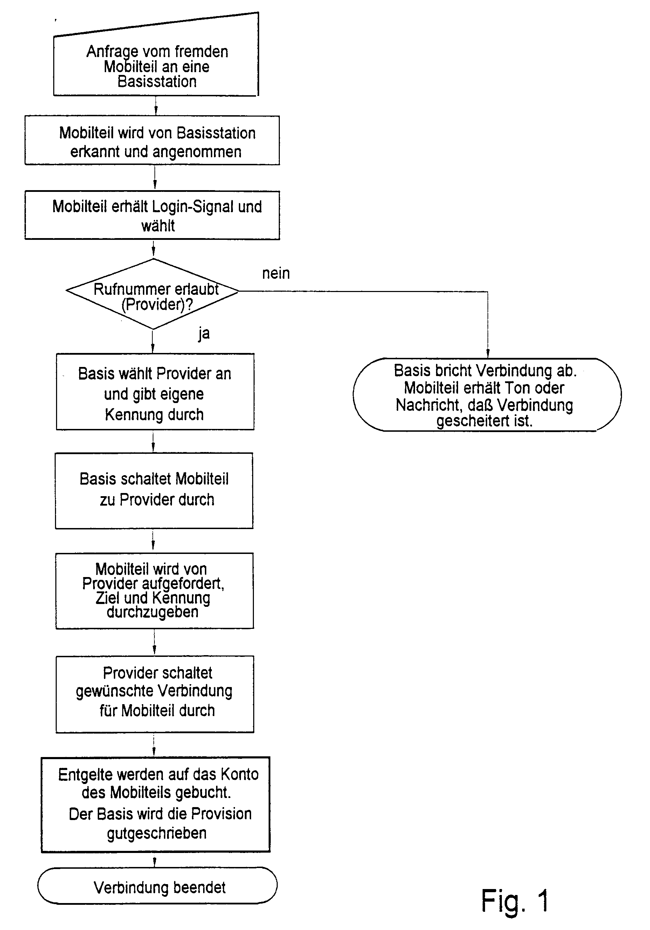

Figur 1 zeigt anhand eines Ablaufschemas den erfindungsgemäßen Verfahrensablauf anhand des Beispiels einer Verbindung von einem Mobilteil zu einer fremden DECT Basisstation.

Angenommen wird, ein Besitzer eines DECT-Mobiltelefons, beispielsweise ein Handelsvertreter, befindet sich in einem Gebiet, welches in der Reichweite einer fremden Basisstation liegt. Diese Basisstation bietet als Dienstleistung den Netzzugang, beispielsweise zu einem Calling Card Provider, an.

Über sein Mobilteil logt sich der Besitzer des DECT-Mobiltelefons in die fremde Basisstation ein. Das Mobilteil wird von der Basisstation erkannt und angenommen. Das Mobilteil erhält ein Login-Signal und wählt.
In der Basisstation wird geprüft, ob die Verbindung erlaubt ist oder nicht. Wird festgestellt, daß die Verbindung nicht erlaubt ist, bricht die Basisstation die Verbindung zum Mobilteil ab. Das Mobilteil erhält ein Hinweis in Form eines Tonzeichens oder einer Sprachausgabe, daß die gewünschte Verbindung nicht möglich ist.
Wenn festgestellt wird, daß die gewählte Rufnummer erlaubt ist, wählt die Basisstation den Calling Card Provider an und gibt automatisch die eigene Kennung (dritte Identifikationsnummer) zum Calling Card Provider durch. Nach der Herstellung der Verbindung zwischen Mobilteil des Calling Card Nutzers und Telekommunikationseinrichtung des Calling Card Providers wird der Calling Card Nutzer vom Calling Card Provider wie üblich aufgefordert, das Ziel seines Anrufwunsches und seine Kennung durchzugeben.
Nach erfolgreicher Prüfung des Verbindungswunsches Calling Card Nutzers schaltet der Calling Card Provider die gewünschte Verbindung zum Mobilteil des Calling Card Nutzers durch.

Denkbar ist auch, daß die Kennung (dritte Identifikationsnummer) erst nach der Herstellung der Verbindung zum Calling Card Provider und nach der Eingabe der Kartennummer und der PIN zur Telekommunikationseinrichtung des Calling Card Providers über-tragen wird. Die Übertragung der dritten Identifikationsnummer kann dabei entweder automatisch von der Basisstation ausgelöst werden oder durch die Telekommunikationseinrichtung des Calling Card Providers automatisch abgefragt werden.

Entstandene Gebühren werden auf die Calling Card des Besitzers des Mobilteils gebucht. Für die Bereitstellung des Netzzugangs wird der Basisstation eine Provision gutgeschrieben. Die Überweisung der Provision für die vom Besitzer der Basisstation erbrachte Dienstleistung (Bereitstellung eines Netzzugangs) wird von Calling Card Provider vorgenommen.

## Patentansprüche

1. Verfahren zur Gebührenabrechnung zwischen einem Dienstleister, der einen Calling Card Service anbietet und einem Dienstleister, der für einen Calling Card Nutzer den Netzzugang zum Calling Card Service bereitstellt und bei dem der Calling Card Nutzer nach der Herstellung der Verbindung zum Calling Card Provider zur Identifizierung gegenüber dem Calling Card Provider seine Kartennummer und seine PIN übermittelt, **dadurch gekennzeichnet,** daß zusätzlich zu den vom Calling Card Nutzer übermittelten Daten eine dritte Identifikationsnummer zum Calling Card Provider übermittelt wird, die den Dienstleister identifiziert, der den Netzzugang bereitgestellt hat, und daß durch die dritte Identifikationsnummer die Abrechnung zwischen Calling Card Provider und Dienstleister, der den Netzzugang bereitgestellt hat, abgesichert wird.

2. Verfahren nach Anspruch 1, dadurch gekennzeichnet, daß die dritte Identifikationsnummer von der Telekommunikationseinrichtung, die den Netzzugang für den Calling Card Nutzer bereitstellt, automatisch zur Telekommunikationseinrichtung des Calling Card Providers übertragen wird.

3. Verfahren nach Anspruch 1 und 2, dadurch gekennzeichnet, daß die automatische Übertragung der dritten Identifikationsnummer zur Telekommunikationseinrichtung des Calling Card Providers nach der Übertragung der Kartennummer und der PIN erfolgt.
